# EUROPÄISCHE PATENTSCHRIFT

(11) **EP 2 812 122 B1**
(45) Veröffentlichungstag und Bekanntmachung des Hinweises auf die Patenterteilung: **02.12.2015**
(21) Anmeldenummer: 13707545.3
(22) Anmeldetag: 08.02.2013
(51) Int. Cl.: B04C 5/18, C01F 11/46, C04B 28/14, C04B 11/26

(54) **VERFAHREN ZUR FEINSTOFFREDUKTION IM REA-GIPS**
METHOD FOR REDUCING THE CONTENT OF FINE MATERIAL IN FGD GYPSUM
PROCÉDÉ DE RÉDUCTION DE MATIÈRE FINE DANS UN PLÂTRE PRODUIT AU MOYEN D'UNE INSTALLATION DE DÉSULFURATION DES GAZ DE FUMÉE (REA)

(30) Priorität: 10.02.2012 AT 1762012
(43) Veröffentlichungstag der Anmeldung: 17.12.2014
(73) Patentinhaber: Andritz AG, 8045 Graz (AT)
(72) Erfinder: KRAMER, Michael, A-8020 Graz (AT); GRUBER-WALTL, Andreas, A-8045 Graz (AT)
(74) Vertreter: Tschinder, Thomas
(86) Internationale Anmeldenummer: PCT/EP2013/000379
(87) Internationale Veröffentlichungsnummer: WO 2013/117341

(56) Entgegenhaltungen:
- WO-A1-2010/089309
- DE-A1- 19 652 482
- DE-C1- 4 034 497
- US-A- 5 308 509

## Beschreibung

Den Gegenstand dieser Erfindung bildet ein Verfahren zur Gewinnung von Gips mit Hilfe einer Rauchgasentschwefelungsanlage (REA), wobei eine Gipssuspension, die auch Feinstoffe wie beispielsweise Aktivkohlepartikel oder Restkarbonatpartikel enthält, im Wäscher der nassen Rauchgaswäsche anfällt und wobei die gipshaltige Suspension mittels zumindest eines Hydrozyklons eingedickt und die eingedickte Gipssuspension über den Unterlauf des Hydrozyklons abgeführt wird.

Die Rauchgasentschwefelung ist ein Verfahren zur Entfernung von Schwefelverbindungen aus den Abgasen von z.B. Kraftwerken, Müllverbrennungsanlagen oder Großmotoren. Die Schwefelverbindungen entstehen dabei durch das Verbrennen schwefelhaltiger zumeist fossiler Brennstoffe. Die Anlagen zur Rauchgasentschwefelung werden mit REA (Rauchgasentschwefelungsanlage) abgekürzt. Eine Rauchgasentschwefelungsanlage kann auch für die Gewinnung von Gips (REA-Gips) genutzt werden. Diese Art der Gipsgewinnung ist bereits seit langem Stand der Technik.

Die bei der Entschwefelung zur Anwendung gebrachte Waschsuspension (Gipssuspension) wird nach heutigem Stand der Technik mittels Hydrozyklonen eingedickt und anschließend via Bandfilter oder Zentrifuge auf den Endtrockengehalt gebracht. In der Vergangenheit wurde an die Vorentwässerung im Zyklon nur die Anforderung gestellt, die vorgegebenen Feststoffgehalte sowie die vorgegebenen Massenströme der Feststoffe einzuhalten. Dementsprechend kamen nur einfache Zyklone zur Anwendung, die durch Anpassung der Hauptabmessungen (Zyklondurchmesser und Länge), Unterlaufdüsendurchmesser und Tauchrohrdurchmesser sowie der Prozessführung (Vorgabe der Feststoffgehalte im Einlauf, Festlegung des Differenzdruckes Einlauf - Oberlauf) an die geforderten Parameter herangeführt wurden. Spezielle Anforderungen hinsichtlich der Abtrennung spezieller Feinstofffraktionen wurden nicht gestellt.

Üblicherweise werden an die Gipsqualität Anforderungen bezüglich Reinheitsgrad gestellt. Der Gehalt an CaSO₄*2H₂O darf zumeist 95% nicht unterschreiten (siehe dazu auch die Vorgaben der EUROGYPSUM). Diese Anforderungen werden tendenziell immer strenger. Aus diesem Grund ergibt sich die Aufgabenstellung, nach einem adaptierten Verfahren zu suchen, das die Einflussnahme auf die Verunreinigungen (zumeist Feinstoffe) im Unterlauf in größerem Masse ermöglicht, als dies mit den heute üblichen Anlagenschaltungen der Fall ist.

Als Verunreinigungen gelten insbesondere Inerte, Russ und Restkarbonat, welche über das Absorbens, oder auch über Flugasche eingetragen werden können. Gemein ist diesen Verunreinigungen, dass sie in der Regel etwas feinkörniger sind, als der gebildete Gips.

Zudem wird in jüngster Vergangenheit die Einführung eines Grenzwertes für die Quecksilberbeladung im REA Gips angedacht. Das ist insbesondere im Hinblick auf die Stabilisierung von Quecksilber im Wäscher von Bedeutung, weil bei den gängigen Verfahren zumeist eine Quecksilber Anreicherung in der zudosierten (adsorptiven) feinkörnigen Phase (z.B. Aktivkohle, beschrieben in der EP2033702A1) beobachtet wird. Die Anreicherung an einer Partikelfraktion führt aber unweigerlich zu erhöhten Quecksilberwerten im entwässerten Gips.

Verwendet man anstatt eines Adsorptionsmittels ein Fällungsmittel, um das gelöste Schwermetall zu stabilisieren (z.B. TMT15, siehe auch EP2033702A1), so wird dieses insbesondere an der Fein und Feinstfraktion abgelagert. Eine gezielte Abtrennung ist mit einem Zentrifugalreinigungsaggregat (Hydrozyklon, Schleuder) nicht möglich.

Ein Hydrozyklon besteht in der Regel aus einem zylindrischen Segment mit einem tangentialen Zulauf (Einlaufdüse) und einem daran anschließenden konischen Segment mit der Unterlauf- oder Apexdüse. Der Vortex-Finder bzw. die Oberlaufdüse ragt in Form eines Tauchrohres axial von oben in das Innere des Zyklons.

Durch den tangentialen Zulauf in das zylindrische Segment wird die Flüssigkeit auf eine Kreisbahn gezwungen und strömt in einem abwärtsgerichteten Wirbel nach unten. Durch die Verjüngung im konischen Segment kommt es zu einer Verdrängung von Volumen nach innen und zu einem Aufstau im unteren Bereich des Konus. Dies führt zur Bildung eines inneren, aufwärtsgerichteten Wirbels, der durch die Oberlaufdüse abgeführt wird. Ziel ist die Abscheidung der spezifisch schwereren Fraktion (z. B. Feststoff) an der Wand des Zyklons und somit der Austrag durch die Unterlaufdüse, während die spezifisch leichtere Fraktion durch die Oberlaufdüse entweicht. Der unten abgeführte, eingedickte Strom wird Unterlauf genannt, der nach oben abgeführte, vom Feststoff stark befreite Strom, wird als Ober- bzw. Überlauf bezeichnet.

Die Bezeichnungen "oben" und "unten" gehen in der vorliegenden Beschreibung vom Unterlauf (spezifisch schwerere bzw. gröbere Fraktion) und dem Oberlauf (spezifisch leichtere bzw. feinere Fraktion) aus. Die tatsächliche Positionierung des Hydrozyklons ist davon jedoch weitestgehend unabhängig, so finden durchaus auch horizontal eingebaute Hydrozyklone Anwendung.

Das Grundprinzip des Trenn- und Klassiereffekts eines Hydrozyklons wird durch das Zusammenspiel der Flieh- und Strömungskräfte beschrieben. Während auf große Partikel mit hoher Dichte (Grobstoffe) die Fliehkraft stärker wirkt und diese somit nach außen zur Zyklonwand abgeschieden werden, ist bei kleinen Partikeln, aufgrund ihrer höheren spezifischen Oberfläche, die Kraft der Strömung auf die Partikel (Widerstandskraft) von übergeordneter Bedeutung. Die spezifisch schwerere Grobfraktion reichert sich im Unterlauf an, die feinkörnige und/oder leichte Fraktion wird im Oberlauf abgezogen.

Daraus folgt, dass sehr kleine Partikel (Feinstofffraktion) sich mittels gängiger Hydrozyklone nicht signifikant an oder abreichern lassen (volumenbezogen), weil sich diese ähnlich wie eine Lösung verhalten. Die Aufteilung der Feinstofffraktion entspricht somit zumeist nur dem volumetrischen Split zwischen Oberlauf und Unterlauf.

Die wirkungsvolle Abtrennung einer Feinteilfraktion aus dem Unterlauf ist aufgrund der genannten Zusammenhänge für einen gängigen Hydrozyklon (bzw. allgemein für einen auf Fliehkraft basierenden Trennapparat) nicht zu erwarten. Volumenbezogen ist lediglich eine Aufkonzentration von Grobstoffen im Unterlauf möglich, einhergehend mit einer Abreicherung der Grobstoffe im Überlauf.

Bei einer durchgeführten Fliehkraft- Klassierung gelangt deshalb immer ein dem abgezogenen Volumen entsprechender Anteil von Feinstoffen in den Unterlauf. Im nachfolgenden Entwässerungsschritt, beispielsweise mittels Bandfilter oder Zentrifugen, können diese Feinstoffe auch durch eine Gipswäsche nicht mehr abgetrennt werden. Daher wird der dieserart entwässerte Gips den immer strenger werdenden Anforderungen nicht mehr entsprechen.

Um die störenden Feinstofffraktionen im Unterlauf zu reduzieren, ist es prinzipiell möglich, mehrstufige Zyklonschaltungen mit einer Zwischenverdünnung zwischen den einzelnen Hydrozyklonen zu verwenden. Diese Anlagen, wie sie beispielsweise in der DE 40 34 497 C1 offenbart sind, sind jedoch anlagentechnisch aufwändig und mitunter von der Wasserbilanz her nicht umsetzbar, da der Verdünnungswasserbedarf zu hoch ist.

Es ergibt sich somit für alle angeführten Anwendungen die Aufgabenstellung, einen möglichst feinstofffreien Unterlauf mittels Fliehkraftabscheidung abzutrennen, wobei die Anlage einen möglichst einfachen Aufbau aufweisen soll.

Gelöst wird diese Aufgabe durch ein Verfahren zur Gewinnung von Gips bei dem dem Fliehkraftabscheider (Hydrozyklon, Schleuder, o.ä.) zusätzlich zur Gipssuspension über eine eigene Zuleitung Wasser zugeführt wird, sodass es dadurch zu einer Feinstoffabreicherung, bezogen auf das Suspensionsvolumen, im Unterlauf kommt.

Die Abreicherung kann spezifisch erfolgen (durch verdrängen der kontinuierlichen Phase bzw. einbringen einer Trennschicht für Grob / Feinstoffe) bzw. unspezifisch durch Verdünnungswasserdosierung im Zyklon.

Die Vorentwässerung der Gipssuspension erfolgt also solcherart, dass nur Zyklone zur Anwendung gelangen, welche eine Reduktion (Abreicherung) der Feinstoffe im Unterlauf bewirken (bezogen auf den Feinstoffgehalt im Zulauf).

Eine Abreicherung des Feinstoffanteils im Unterlauf kann am einfachsten durch eine einfache Zwischenverdünnung innerhalb eines Zyklons erfolgen oder durch die Verdrängung der flüssigen Phase im Unterlauf durch gezielte Dosierung eines Waschwasserstromes. In der WO 2010/089309 A1 wird diesbezüglich von einer Gegenstromklassierung gesprochen. Die Zwischenverdünnung muss allerdings mit einem Fluidstrom erfolgen, der die Problemfraktion nicht beinhaltet.

Erfindungsgemäß wird das Wasser als Sperrwasserstrom zur Bildung einer Sperrwasserschicht im Einlaufbereich oder im Konusbereich des Hydrozyklons zudosiert, wobei der Sperrwasserstrom und die Gipssuspension im Hydrozyklon durch eine Lamelle getrennt werden, bis sich die Sperrwasserströmung und Gipssuspensionsströmung im Wesentlichen stabil ausgebildet hat.

Es ist auch vorteilhaft, wenn der Hydrozyklon einen zylindrischen Einlaufbereich und einen Konusbereich aufweist.

Durch die zusätzliche Zudosierung dieses Sperrwasserstromes wird eine reine Sedimentationsschicht in den Zyklon eingebracht, durch die Schwerteile abgeschieden werden, Feinanteile (Feinstoffe) aber überwiegend in der Kernströmung verbleiben. Die Sperrwasserströmung umgibt dabei die Gipssuspension ringförmig. Die Feinstoffe bzw. das Feinkorn werden also im Unterlauf abgereichert, bezogen auf die volumenbezogene Konzentration im Einlauf.

Als Ergebnis erhält man eine Schwerteilfraktion im Unterlauf, welche eine deutlich reduzierte Feinteilfraktion aufweist.

Vorzugsweise werden die Sperrwasserschicht und die Gipssuspension durch eine im zylindrischen Segment oder im Konusbereich angeordnete zylindrische oder konische Lamelle voneinander getrennt.

Es ist günstig, wenn die Sperrwasserschicht und die Gipssuspension im Hydrozyklon zusammen weitergeführt werden, sobald sich die Sperrwasserströmung und Gipssuspensionsströmung im Wesentlichen stabil ausgebildet haben (nur mehr untergeordnete Vermischung).

Vorzugweise wird das Wasser dem Hydrozyklon tangential zugeführt. Dadurch kann sich beispielsweise eine stabile kreisförmige Sperrwasserströmung im Zykloninneren ausbilden.

Es ist auch denkbar, dass die gipshaltige Suspension mittels zweier oder mehrerer in Serie geschalteter Hydrozyklone eingedickt wird, wobei den Hydrozyklonen über eine jeweils eigene Zuleitung Wasser zugeführt wird, sodass es dadurch zu einer Feinstoffabreicherung im Unterlauf, bezogen auf den Zulauf zur ersten Stufe kommt. Bei mehrstufigen Ausführungen ist zudem eine Verdünnung zwischen den Zyklonstufen günstig.

Im Folgenden werden zwei Ausführungsbeispiele des erfindungsgemäßen Verfahrens anhand von vier Zeichnungen beschrieben. Es zeigen:
Fig. 1 ein schematisches Verfahrensschema für ein mögliches Ausführungsbeispiel des erfindungsgemäßen Verfahren;
Fig. 2 ein schematisches Verfahrensschema für ein weiteres Ausführungsbeispiel des erfindungsgemäßen Verfahren;
Fig. 3 ein Ausführungsbeispiel für einen für das erfindungsgemäße Verfahren geeigneten Hydrozyklon;
Fig. 4 ein Ausführungsbeispiel für einen nicht erfindungsgemäßen Hydrozyklon;

Gleiche Bezugszeichen in den jeweiligen Zeichnungen bezeichnen jeweils die gleichen Bauteile.

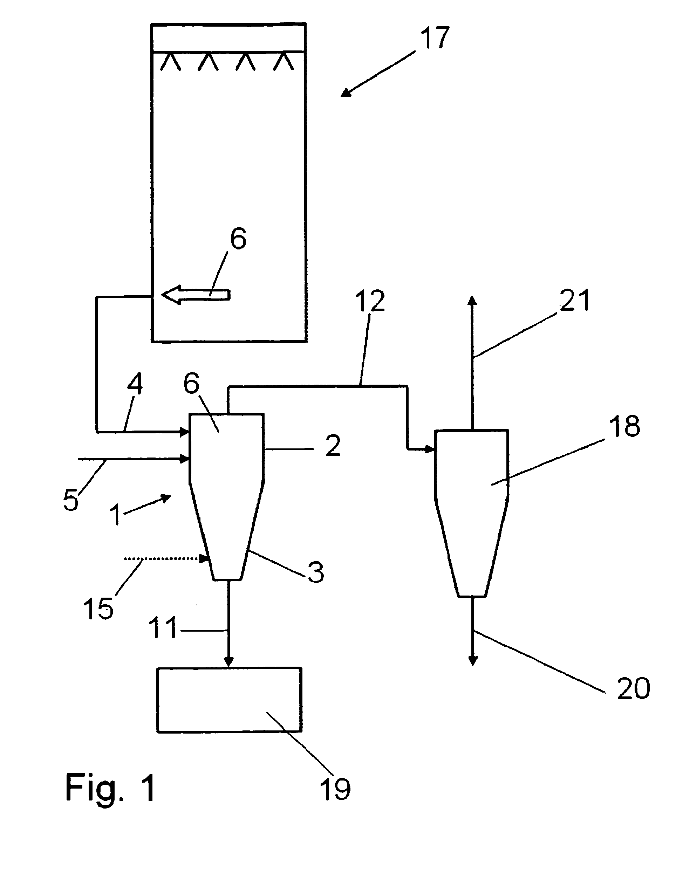

In Figur 1 ist ein mögliches Verfahrensschema für das erfindungsgemäße Verfahren zur Gipsgewinnung dargestellt. Die Gipssuspension 6 fällt dabei in an sich bekannter Weise im Wäscher 17 einer Rauchgasentschwefelungsanlage (REA) an. Die Gipssuspension 6 wird mit Hilfe eines Hydrozyklons 1 eingedickt. Dafür wird die Gipssuspension 6 über einen tangentialen Zulauf 4 dem Hydrozyklon 1 zugeführt. Der Hydrozyklon 1 besteht aus einem zylindrischen Einlaufbereich 2 und aus einem Konusbereich 3. Die eingedickte Gipssuspension 6 wird über den Unterlauf 11 dem Hydrozyklon entnommen. Die spezifisch leichtere Fraktion, vorwiegend Wasser aber auch Feinstoffe, wird als Oberlauf 12 abgeführt. Der Oberlauf 12 wird dann einem Abwasserzyklon 18 zugeführt und dort ebenfalls in bekannter Weise in Unterlauf 20 und Oberlauf 21 aufgeteilt. Der Unterlauf 20 kann dann wieder der Rauchgasentschwefelungsanlage zugeführt werden, der Oberlauf 21 wird üblicherweise einer Abwasseraufbereitungsanlage zugeführt.

Die eingedickte Gipssuspension 6 aus dem Unterlauf 11 wird weiteren Entwässerungsaggregaten oder Trocknungsaggregaten, wie beispielsweise einem Bandtrockner 19, zugeführt.

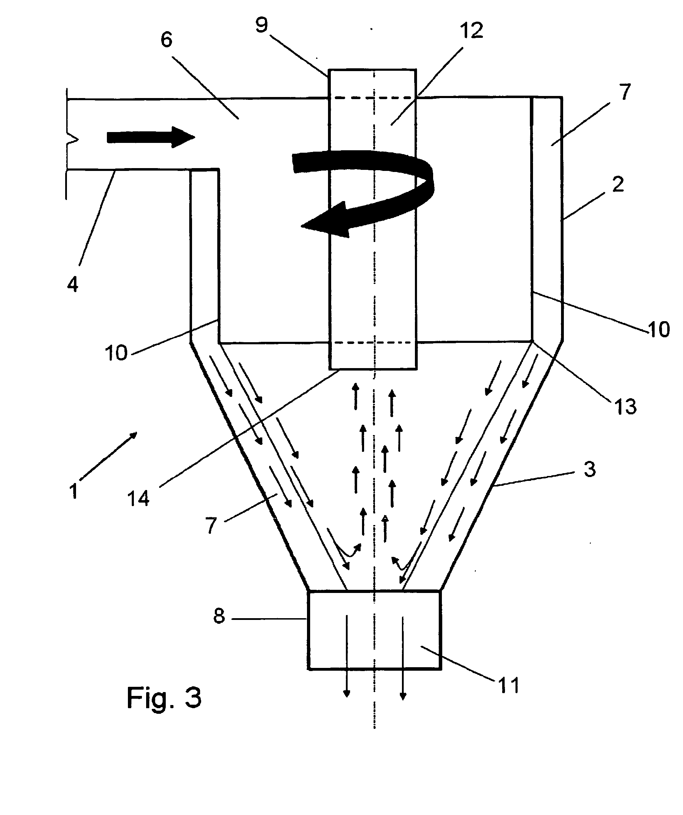

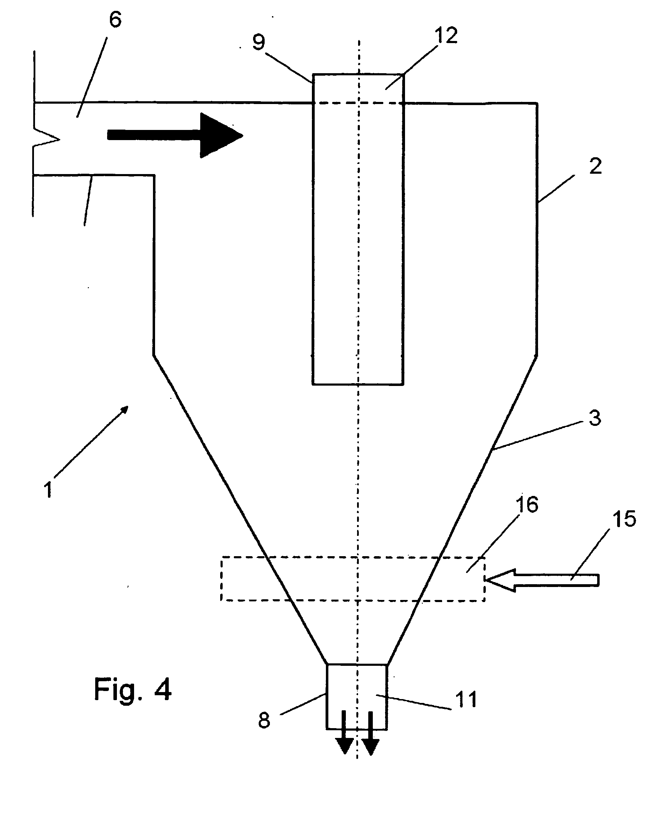

Zur Abreicherung der Feinstoffe im Unterlauf 11 wird dem Hydrozyklon 1 Wasser (5, 15) zugeführt. Es kann sich dabei um eine Zufuhr eines Sperrwasserstromes 5 im Einlaufbereich 2 des Hydrozyklons 1 handeln (siehe Fig. 3) oder aber auch um eine zusätzliche Zufuhr von Verdünnungswasser 15 im. Konusbereich 3 bzw. im Bereich des Unterlaufs 11 (siehe Fig. 4). Bei den Feinstoffen kann es sich beispielsweise um Aktivkohlepartikel, die häufig mit Quecksilber beladen sind, handeln oder aber auch um Restkarbonatpartikel, Inerte oder um Flugasche.

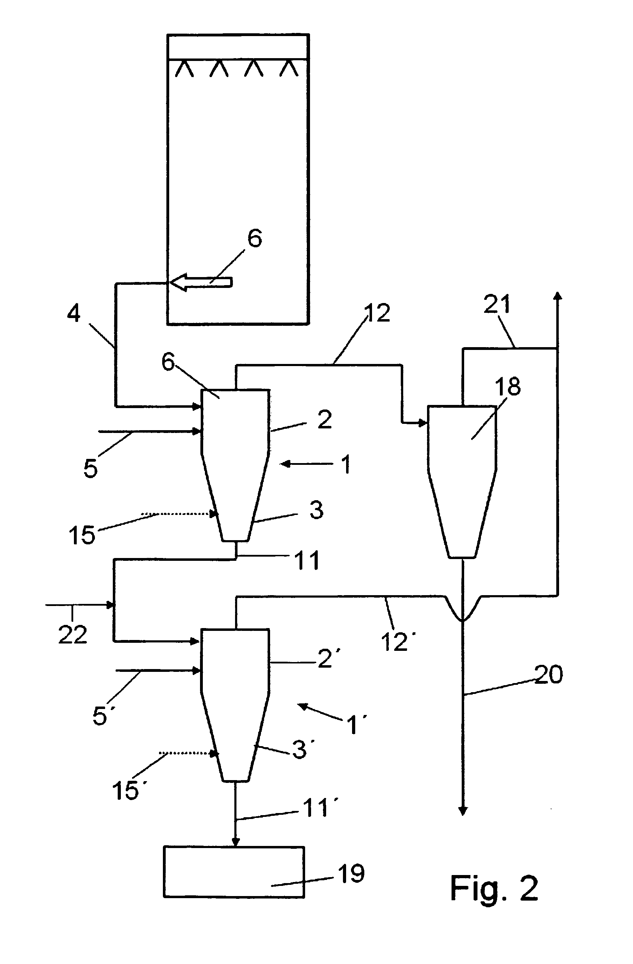

In Figur 2 sind zur Eindickung der Gipssuspension 6 zwei Hydrozyklone 1, 1' hintereinandergeschaltet. Der Unterlauf 11 aus dem ersten Hydrozyklon 1 bildet dabei den Zulauf zum zweiten Hydrozyklon 1'. Der zweite Hydrozyklon 1' weist ebenfalls einen zylindrischen Einlaufbereich 2', einen Konusbereich 3' und ebenfalls eine Wasserzufuhr 5' und 15' auf. Die eingedickte Gipssuspension 6 aus dem Unterlauf 11' des zweiten Hydrozyklons 1' wird dann einem Bandtrockner 19 zugeführt. Der Oberlauf 12' des zweiten Hydrozyklons 1' kann mit dem Oberlauf 21 des Abwasserzyklons 18 vereint werden. Zwischen den beiden Hydrozyklonen 1 und 1' kann optional zur Zwischenverdünnung Verdünnungswasser 22 zugeführt werden.

In Figur 3 ist beispielhaft eine Ausführungsform für einen Hydrozyklon 1 bzw. 1', der für das erfindungsgemäße Verfahren geeignet ist, dargestellt. Er besteht aus einem zylindrischen Einlaufbereich 2 und aus einem daran anschließenden Konusbereich 3. Über den tangentialen Zulauf 4 wird die Gipssuspension 6 dem Hydrozyklon 1 zugeführt. Der Konusbereich 3 weist eine Unterlaufdüse 8 zur Abfuhr des Unterlaufs 11, also der eingedickten Gipssuspension 6, auf. Durch die Oberlaufdüse 9, die in Form eines Tauchrohres axial in das Innere des Hydrozyklons 1 ragt, kann die spezifisch leichtere Fraktion, also der Oberlauf 12, abgeführt werden.

Neben dem tangentialen Zulauf 4 weist der Hydrozyklon 1 auch einen weiteren Zulauf für einen Sperrwasserstrom 5 auf, der hier ebenfalls tangential dem zylindrischen Segment 2 zugeführt wird. In Figur 3 verläuft er parallel zum tangentialen Zulauf 4 und wird daher durch diesen verdeckt. Die Sperrwasserschicht 7 und die Gipssuspension 6 werden dem Hydrozyklon 1 getrennt zugeführt und durch die Lamelle 10 voneinander getrennt. Bei der Lamelle 10 handelt es sich beispielsweise um ein zylinderförmiges, dünnwandiges Bauteil aus Metall. Die reine Sperrwasserschicht 7 trifft am unteren Ende 13 der Lamelle 10 mit der eigentlichen Gipssuspension 6 zusammen.

Dies erfolgt, sobald die Strömungen von Sperrwasser 7 und Gipssuspension 6 stabil ausgebildet sind. Die Mündungsöffnung 14 der Oberlaufdüse 9 endet hier beispielhaft im Bereich unterhalb des Endes 13 der Lamelle 10.

Nach der Zusammenführung der beiden Volumenströme 7, 6 stellt sich eine Sedimentationsbewegung von Schwerteilen (Gips) durch die Sperrschicht 7 ein. Dadurch kommt es zu einer Abreicherung der Feinstoffe im Unterlauf 11. Im konischen Segment 3 erfolgt die Strömungsführung wie in konventionellen Hydrozyklonen.

Durch die Strömungspfeile wird angedeutet, dass sich die Sperrwasserströmung 7 und die Gipssuspension 6 möglichst wenig miteinander vermischen. Die Sperrwasserströmung 7 bildet also zur Wand des konusförmigen Segmentes 3 hin eine Sperrwasserschicht 7 aus.

Optional kann im konischen Segment 3 bzw. im Unterlaufbereich zusätzlich Wasch- oder Verdünnungswasser eingebracht werden, dadurch kann der volumenbezogene Anteil der Feinstoffe im Unterlauf 11 weiter reduziert werden. Denkbar ist auch eine Einbringung eines Wasserstromes zur Speisung des Vortex, um eine Wiederaufwirbelung von Grobstoffpartikeln zu unterbinden.

In Figur 4 ist ein nicht erfindungsgemäßer Hydrozyklon 1 bzw. 1' dargestellt. Dieser Hydrozyklon 1 weist einen zylindrischen Einlaufbereich 2, einen Konusbereich 3, eine Unterlaufdüse 8 zur Abfuhr des Unterlaufs 11 und eine Oberlaufdüse 9 zur Abfuhr des Oberlaufs 12 auf. Bei diesem Hydrozyklon 1 wird im Konusbereich 3 bzw. im Unterlaufbereich Verdünnungswasser 15 zugeführt und zwar über den Wasserverteiler 16, durch den das Verdünnungswasser 15 der Gipssuspension 6 tangential zugeführt wird. Durch die gerichtete Zuführung des Verdünnungswassers 15 durch den Wasserverteiler 16 kommt es zu einer Überlagerung der im Hydrozyklon 1 gegebenen Querstromklassierung mit einer Gegenstromklassierung. Hierbei wird im Zentrifugalfeld des Hydrozyklons 1 durch das Verdünnungswasser 15 eine zum Zentrum gerichtete Radialströmung erzeugt. Durch diese gerichtete Verdünnungswasserzugabe 15 kommt es zu einer Reduzierung der Feinstoffe (des Feinkorns) im Unterlauf 11.

Der Wasserverteiler 16 umfasst beispielsweise eine Vielzahl von Bohrungen, die ringförmig in den Konusbereich 3 oder in den Bereich der Unterlaufdüse 8 münden, und die so das Verdünnungswasser 15 gleichmäßig über die äußere Wand des Hydrozyklons 1 verteilt in die Gipssuspension 6 einmischen. Die in den Zeichnungen dargestellten Ausführungsformen stellen lediglich eine bevorzugte Ausführung der Erfindung dar. Die Erfindung umfasst auch andere Ausführungsformen, bei denen beispielsweise mehrere weitere Zuläufe fürs Sperrwasser 5, 5' oder fürs Verdünnungswasser 15, 15' vorgesehen sind.

## Patentansprüche

1. Verfahren zur Gewinnung von Gips mit Hilfe einer Rauchgasentschwefelungsanlage, wobei eine Gipssuspension (6), die auch Feinstoffe wie beispielsweise Aktivkohlepartikel oder Restkarbonatpartikel enthält, im Wäscher (17) einer nassen Rauchgaswäsche anfällt und wobei die gipshaltige Suspension (6) mittels zumindest eines Hydrozyklons (1, 1') eingedickt und die eingedickte Gipssuspension über den Unterlauf (11, 11') des Hydrozyklons (1, 1') abgeführt wird, **dadurch gekennzeichnet, dass** dem Hydrozyklon (1, 1') neben der Gipssuspension (6) über eine eigene Zuleitung Wasser (5, 5') zugeführt wird, sodass es dadurch zu einer Feinstoffabreicherung bezogen auf das Suspensionsvolumen im Unterlauf (11, 11') kommt, wobei das Wasser (5, 5') als Sperrwasserstrom (5, 5') zur Bildung einer Sperrwasserschicht (7) im Einlaufbereich (2, 2')oder im Konusbereich (3, 3') des Hydrozyklons (1, 1') zudosiert wird und wobei der Sperrwasserstrom (7) und die Gipssuspension (6) im Hydrozyklon durch eine Lamelle (10) getrennt werden, bis sich die Sperrwasserströmung (7) und Gipssuspensionsströmung (6) im Wesentlichen stabil ausgebildet hat.

2. Verfahren nach Anspruch 1, **dadurch gekennzeichnet, dass** der Hydrozyklon (1, 1') einen zylindrischen Einlaufbereich (2, 2') und einen Konusbereich (3, 3') aufweist, wobei der Sperrwasserstrom im Einlaufbereich (2, 2') zugeführt wird und wobei zusätzlich Wasser (15, 15') als Verdünnungswasser (15, 15') zur Zwischenverdünnung der Gipssuspension (6) im konusbereich (3, 3') oder im Bereich der Unterlaufdüse (8) zugeführt wird.

3. Verfahren nach Anspruch 1, **dadurch gekennzeichnet, dass** der Hydrozyklon (1, 1') nur einen Konusbereich (3, 3') aufweist und dass zusätzlich Wasser (15, 15') als Verdünnungswasser (15, 15') zur Zwischenverdünnung der Gipssuspension (6) im Konusbereich (3, 3') oder im Bereich der Unterlaufdüse (8) zugeführt wird.

4. Verfahren nach Anspruch 1 oder 2, **dadurch gekennzeichnet, dass** der Hydrozyklon (1, 1') einen zylindrischen Einlaufbereich (2, 2') und einen Konusbereich (3, 3') aufweist.

5. Verfahren nach Anspruch 1 oder 3, **dadurch gekennzeichnet, dass** der Hydrozyklon (1, 1') nur einen Konusbereich (3, 3') aufweist.

6. Verfahren nach einem der Ansprüche 1 bis 5, **dadurch gekennzeichnet, dass** das Wasser (5, 5', 15, 15') dem Hydrozyklon (1, 1') tangential zugeführt wird.

7. Verfahren nach einem der Ansprüche 1 bis 6, **dadurch gekennzeichnet, dass** die gipshaltige Suspension (6) mittels zweier oder mehrere in Serie geschalteter Hydrozyklone (1, 1') eingedickt wird, wobei den Hydrozyklonen (1, 1') über eine jeweils eigene Zuleitung Wasser (5, 5', 15, 15') zugeführt wird, sodass es dadurch zu einer Feinstoffabreicherung bezogen auf das Suspensionsvolumen im jeweiligen Unterlauf (11, 11') kommt.

## Claims

1. Process for the recovery of gypsum with the aid of a flue gas desulphurisation plant, where a gypsum suspension (6) that also contains fine materials such as activated charcoal particles, for example, or residual carbonate particles, is produced in the scrubber (17) of a wet flue gas scrubbing plant, and where the gypsum-containing suspension (6) is thickened by means of at least one hydrocyclone (1, 1') and the thickened gypsum suspension is discharged via the underflow (11, 11') from the hydrocyclone (1, 1'), **characterised in that** water (5, 5') is fed to the hydrocyclone (1, 1') through a dedicated feed pipe in addition to the gypsum suspension (6), thus resulting in fine material depletion in the underflow (11, 11') in relation to the suspension volume, where the water (5, 5') is added in metered doses in the inflow region (2, 2') or in the conical region (3, 3') of the hydrocyclone (1, 1') as a sealing water flow (5, 5') to form a sealing water layer (7), and where the sealing water flow (7) and the gypsum suspension (6) are separated from one another in the hydrocyclone by a lamella (10) until the sealing water flow (7) and gypsum suspension flow (6) have become essentially stable.

2. Process according to Claim 1, **characterised in that** the hydrocyclone (1, 1') has a cylindrical inflow region (2, 2') and a conical region (3, 3'), where the sealing water flow is added in the inlet region (2, 2') and where water (15, 15') is added in addition as dilution water (15, 15') for intermediate dilution of the gypsum suspension (6) in the conical region (3, 3') or in the region of the underflow nozzle (8).

3. Process according to Claim 1, **characterised in that** the hydrocyclone (1, 1') only has a conical region (3, 3') and **in that** the water (15, 15') is added in addition as dilution water (15, 15') for intermediate dilution of the gypsum suspension (6) in the conical region (3, 3') or in the region of the underflow nozzle (8).

4. Process according to Claim 1 or 2, **characterised in that** the hydrocyclone (1, 1') has a cylindrical inflow region (2, 2') and a conical region (3, 3').

5. Process according to Claim 1 or 3, **characterised in that** the hydrocyclone (1, 1') has only a conical region (3, 3').

6. Process according to one of Claims 1 to 5, **characterised in that** the water (5, 5', 15, 15') is fed to the hydrocyclone (1, 1') at a tangent.

7. Process according to one of Claims 1 to 6, **characterised in that** the gypsum-containing suspension (6) is thickened by means of two or more hydrocyclones (1, 1') connected in series, where water (5, 5', 15, 15') is fed to the hydrocyclones (1, 1') in each case via a dedicated feed pipe, thus resulting in fine material depletion in the respective underflow (11, 11') in relation to the suspension volume.

## Revendications

1. Méthode d'extraction de gypse moyennant une installation pour la désulfuration des gaz de fumée, où une suspension de gypse (6), contenant également des fines comme des particules de charbon actif ou des particules de carbonate résiduel, est produite dans le laveur (17) d'un lavage humide de gaz de fumée et où la suspension à base de gypse (6) se trouve épaissie moyennant un hydrocyclone (1, 1') et où la suspension de gypse épaissie se trouve évacuée de par le cours inférieur (11, 11') de l'hydrocyclone (1, 1'), **caractérisée en ce que,** outre la suspension de gypse (6), de l'eau (5, 5') est amenée à l'hydrocyclone (1, 1') dans son propre tuyau, de sorte que qu'un appauvrissement des fines se produise par rapport au volume de suspension dans le cours inférieur (11, 11'), l'eau (5, 5') étant amenée en tant que courant d'eau d'intercepteur hydraulique (5, 5') pour la formation d'une couche d'eau d'intercepteur hydraulique (7) dans la zone d'entrée (2, 2') ou dans la zone conique (3, 3') de l'hydrocyclone (1, 1') et le courant d'eau d'intercepteur hydraulique (7) et la suspension de gypse (6) étant séparés par une lamelle (10) dans l'hydrocyclone (1, 1') jusqu'à ce que le courant d'eau d'intercepteur hydraulique (7) et le courant de la suspension de gypse (6) deviennent essentiellement stables.

2. Méthode selon la revendication 1, **caractérisée en ce que** l'hydrocyclone (1, 1') comporte une zone d'entrée cylindrique (2, 2') et une zone conique (3, 3'), où le courant d'eau d'intercepteur hydraulique est amené à la zone d'entrée (2, 2') et où de l'eau supplémentaire (15, 15') est amenée dans la zone conique (3, 3') ou dans la zone de la buse du cours inférieur (8) en tant que eau de dilution (15, 15') pour achever une dilution intermédiaire de la suspension de gypse (6).

3. Méthode selon la revendication 1, **caractérisée en ce que** l'hydrocyclone (1, 1') comporte uniquement une zone conique (3, 3') et que de l'eau supplémentaire (15, 15') est ajoutée en tant que eau de dilution (15, 15') pour achever une dilution intermédiaire de la suspension de gypse (6) dans la zone conique (3, 3') ou dans la zone de la buse du cours inférieur (8).

4. Méthode selon la revendication 1 ou 2, **caractérisée en ce que** l'hydrocyclone (1, 1') comporte une zone d'entrée cylindrique (2, 2') et une zone conique (3, 3').

5. Méthode selon la revendication 1 ou 3, **caractérisée en ce que** l'hydrocyclone (1, 1') comporte uniquement une zone conique (3, 3').

6. Méthode selon l'une des revendications 1 à 5, **caractérisée en ce que** l'eau (5, 5', 15, 15') est amenée à l'hydrocyclone (1, 1') tangentiellement.

7. Méthode selon l'une des revendications 1 à 6, **caractérisée en ce que** la suspension à base de gypse (6) se trouve épaissie moyennant deux ou plusieurs hydrocyclones (1, 1') disposés en série, l'eau (5, 5', 15, 15') étant amenée aux hydrocyclones (1, 1') dans des tuyaux propres à chacun des hydrocyclones, de sorte qu'un appauvrissement des fines se produise par rapport au volume de la suspension dans le cours inférieur respectif (11, 11').
